# EUROPÄISCHE PATENTSCHRIFT

(11) **EP 1 776 241 B1**
(45) Veröffentlichungstag und Bekanntmachung des Hinweises auf die Patenterteilung: **06.08.2008**
(21) Anmeldenummer: 05733843.6
(22) Anmeldetag: 09.05.2005
(51) Int. Cl.: B42D 15/10

(54) **INDIVIDUALISIERTES SICHERHEITSDOKUMENT**
INDIVIDUALIZED SECURITY DOCUMENT
DOCUMENT DE SECURITE INDIVIDUALISE

(30) Priorität: 13.08.2004 DE 102004039567
(43) Veröffentlichungstag der Anmeldung: 25.04.2007
(73) Patentinhaber: OVD Kinegram AG, 6301 Zug (CH)
(72) Erfinder: HANSEN, Achim, CH-6300 Zug (CH); PETERS, John, A., CH-8804 Au (CH)
(74) Vertreter: Zinsinger, Norbert
(86) Internationale Anmeldenummer: PCT/EP2005/004752
(87) Internationale Veröffentlichungsnummer: WO 2006/018052

(56) Entgegenhaltungen:
- WO-A-98/19870
- WO-A-20/04011272

## Beschreibung

Die Erfindung betrifft ein individualisiertes Sicherheitsdokument, insbesondere einen Reisepass, das eine Anzahl von Blätter aufweist, die miteinander mittels einer Heftung oder Klebung verbunden sind. Die Erfindung betrifft weiter ein Verfahren zur Individualisierung eines solchen Sicherheitsdokuments.

Ein Reisepass, der mehrere mittels Heftung oder Klebung miteinander verbundene Blätter aufweist, ist beispielsweise in WO 2004/011272 A2 beschrieben. In diesen Reisepass ist weiter durch Heftung oder Klebung eine Obertragungsfolie eingebunden. Die Übertragungsfolie weist eine Grundfolie und eine von der Grundfolie ablösbare Dekorschicht-Anordnung auf, die von der Grundfolie ablösbar ist. Die Dekorschicht-Anordnung weist hierbei eine Replizierlackschicht mit einer holographisch oder beugungsoptisch wirksamen Struktur sowie eine Klebeschicht auf, mittels der die Dekorschicht mit einem Blatt des Reisepasses verbunden werden kann. Zur Individualisierung des Sicherheitsdokuments wird die Klebeschicht der Dekorschicht-Anordnung mit einem individualisierten Aufdruck versehen. Anschliessend wird die Klebeschicht aktiviert und so die Dekorschicht-Anordnung mit dem benachbarten Blatt des Reisepasses verbunden. Anschliessend wird die Grundfolie von der Dekorschicht-Anordnung abgezogen, wobei eine Perforation der Grundfolie im Bereich der Bindung oder Heftung vorgesehen ist, so dass die Grundfolie anschliessend aus dem Reisepass entfernt werden kann.

Weiter ist es bekannt, Reisepässe mit RF-Identifikationsschaltungen auszustatten (RF = Radio Frequency).

Aufgrund der Dicke und mechanischen Flexibilität von RF-Identifikationschaltungen werden solche Schaltungen hierbei üblicherweise auf oder in dem Einband eines Reisepasses befestigt, der über eine grössere Dicke und höhere mechanische Stabilität als die einzelnen Blätter des Reisepasses verfügt.

So beschreibt beispielsweise US 4 220 956 eine RF-Identifikationsschaltung, die eine Reihe von Antennen besitzt, die mittels eines Ätzprozesses aus einem Kupferlaminat gefertigt sind. Das Kupferlaminat ist auf einem Dielektrikum aufgebracht. Da das Dielektrikum keine elektrische Funktion erbringt, kann es sehr denn ausgeformt werden, wodurch sich die mechanische Flexibilität der RF-identifikationsschaltung erhöht

Weiter beschreibt US 5 528 222 eine RF-Identifikationsschaltung, die einen von einer Basisstation gesendete RF-Träger zurück zur Basisstation reflektiert und hierbei dem reflektierten Signal eine zusätzliche Information gemäss eines vorprogrammierten Informationsprotokolls aufmoduliert. Die RF-Identifikationsschaltung weist eine Halbleiterschaltung mit einem Speicher und ein oder mehrere RF-Bauteile einer RF-Schaltung auf. Die Halbleiterschaltung ist auf einem Substrat montiert. Das von der Antenne empfangene RF-Signal wird an die Halbleiterschaltung weitergeleitet. Bei dem Substrat handelt es sich um ein flexibles, nicht leitendes Substrat. Die Antenne ist ein integraler Bestandteil des Substrats. Sie besteht aus einer 25 bis 35 µm dicken Bahn, die auf einer Polyester- oder Polyamidschicht aufgebracht ist Hierdurch wird erreicht, dass die Dicke der RF-Identifikationschaltung die Dicke des Pass-Einbandes nicht übersteigt und die RF-Identifikationsschaltung so In dem Einband des Reisepasses angeordnet werden kann.

WO-A-9819870 zeigt ein Beispiel des Stands der Technik.

Ein Reisepass, der eine Anzahl Blätter aufweist, die miteinander mittels einer Heftung verbunden sind, wobei in den Reisepass mittels Heftung ein mit einem individualisierten optischen Sicherheitselement versehener mehrschichtiger Folienkörper eingebunden ist, der im Bereich der Heftung gefalzt ist, wobei die Falzung den Folienkörper in einen ersten Teil teilt, auf dem das individualisierte optische Sicherheitselement angeordnet ist.

Der Erfindung liegt nun die Aufgabe zugrunde, die Fälschungssicherheit eines Individualisierten Sicherheitsdokuments zu verbessern.

Diese Aufgabe wird von einem individualisierten Sicherheitsdokument gelöst, das eine Anzahl Blätter aufweist, die miteinander mittels einer Heftung oder Klebung verbunden sind und in das weiter mittels Heftung oder Klebung ein mit einem individualisierten optischen Sicherheitselement versehener ein- oder mehrschichtiger Folienkörper eingebunden ist, der im Bereich der Heftung oder Klebung gefalzt ist, wobei die Falzung den Folienkörper in einen ersten Teil, auf dem das individualisierte optische Sicherheitselement angeordnet ist, und einen zweiten, vorzugsweise laschenförmigen Teil teilt, der mit einem mindestens ein maschinenlesbares Sicherheitselement aufweisenden Kunststoffkörper dauerhaft verbunden ist, wobei das mindestens eine maschinenlesbare Sicherheitselement eine elektronische Schaltung zur RF-Identifikation aufweist.

Die Aufgabe wird weiter von einem Verfahren zur Individualisierung eines Sicherheitsdokuments, das eine Anzahl von Blätter aufweist, die miteinander mittels einer Heftung oder Klebung verbunden sind, gelöst, bei dem ein in das Sicherheitsdokument mittels Heftung oder Klebung eingebundener ein- oder mehrschichtiger Folienkörper, der im Bereich der Heftung oder Klebung gefalzt ist und bei dem die Falzung den Folienkörper in einen ersten Teil und einen zweiten, vorzugsweise laschenförmigen Teil teilt, in dem ersten Teil mit einem individualisierten optischen Sicherheitselement versehen wird und der zweite Teil mit einem mindestens ein maschinenlesbares Sicherheitselement aufweisenden Kunststoffkörper dauerhaft verbunden wird, wobei das mindestens eine maschinenlesbare Sicherheitselement eine elektronische Schaltung zur RF-Identifikation aufweist.

Durch die Erfindung werden zahlreiche Vorteile erzielt. So ist es möglich, ein modular erweiterbares Sicherheitselement bereitzustellen, das später, insbesondere nach Schaffung der notwendigen technischen und rechtlichen Grundlagen, mit weiteren maschinenlesbaren Sicherheitselementen versehen werden kann. Hierbei wird durch die Erfindung sichergestellt, dass die individualisierten optischen Sicherheitselemente und die zusätzlichen maschinenlesbaren Sicherheitselemente einerseits durch den Folienkörper eng miteinander verbunden sind, wodurch Manipulationsversuche schnell erkennbar werden, andererseits jedoch in Bezug auf die Parameter optischer Eindruck und Dicke voneinander entkoppelt sind.

Die elektronische Schaltung zur RF-Identifikation ist durch die Erfindung dauerhaft mit dem Folienkörper verbunden, der das individualisierte optische Sicherheitselement bereitstellt. Eine Trennung des individualisierten optischen Sicherheitselements und der elektronischen Schaltung zur RF-Identifikation voneinander ist ohne Zerstörung des Folienkörpers nicht möglich. Eine Zerstörung des Folienkörpers ist leicht aufzudecken, so dass Fälschungen sofort erkannt werden können. Durch die Falzung des Folienkörpers und die Anordnung des individualisierten optischen Sicherheitselements und der Schaltung zur RF-Identifikation in verschiedenen Teilen des Folienkörpers wird erreicht, dass die maschinelle Auslesbarkeit des individualisierten optischen Sicherheitselements durch das Aufbringen der RF-Identifikationsschaltung nicht beeinträchtigt wird und dass weiter die Dicke, mechanische Flexibilität und der optische Eindruck des das individualisierte Sicherheitselement aufweisenden Teil des Folienkörpers nicht von der RF-Identifikationsschaltung beeinflusst wird. Das individualisierte optische Sicherheitselement und die Schaltung zur RF-Identifikation werden so in Bezug auf diese Parameter entkoppelt, sind andererseits jedoch durch den Folienkörper eng miteinander verbunden, so dass Fälschungen sofort augenscheinlich werden.

Vorteilhafte Ausgestaltungen der Erfindung sind den Unteransprüchen zu entnehmen.

Weiter ist es auch möglich, dass der Kunststoffkörper neben der Schaltung zur RF-identifikation mindestens ein weiteres maschinenlesbares Sicherheitselement aufweist. Bei dem weiteren maschinenlesbaren Sicherheitselement kann es sich um ein Sicherheitselement handeln, das eine magnetisch oder elektrisch codierte individualisierte Information aufweist. Beispielsweise weist der Kunststoffkörper weitere elektrische Schaltungen oder eine partiell ausgeführte magnetische oder elektrisch-leitfähige Schicht auf, in die nach Art eines Bar-Codes individualisierte Informationen codiert sind. Weiter ist es auch möglich, dass der Kunststoffkörper ein optisches, weiteres maschinenlesbares Sicherheitselement aufweist, beispielsweise eine diffraktive Struktur, in deren Beugungsverhalten eine individualisierte Information codiert ist, oder eine mittels Infrarot-Strahlung auslesbare Information.

Gemäss einer bevorzugten Ausführungsform der Erfindung werden der ein- oder mehrschichtige Folienkörper und der das mindestens eine maschinenlesbare Sicherheitselement aufweisende Kunststoffkörper miteinander verschweisst. Hierdurch wird eine sichere unlösbare Verbindung zwischen der RF-Identifikationsschaltung und dem individualisierten optischen Sicherheitsmerkmal erzielt. Von besonderem Vorteil ist hier, dass die bei dem Verschweissen auftretenden hohen Temperaturen aufgrund der speziellen Anordnung des Kunststoffkörpers und des individualisierten optischen Sicherheitselements nicht zu einer Zerstörung des individualisierten optischen Sicherheitselements führen.

Weiter ist es auch möglich, den ein- oder mehrschichtigen Folienkörper und den das mindestens eine maschinenlesbare Sicherheitselement aufweisenden Kunststoffkörper mittels eines Permanentklebers, vorzugsweise mittels eines strahlungshärtbaren Klebers, dauerhaft miteinander zu verbinden.

Vorteilhaft ist es, wenn der zweite Teil des ein- oder mehrschichtigen Folienkörpers eine Ausnehmung zur vollständigen oder teilweisen Aufnahme des das mindestens eine maschinenlesbare Sicherheitselement aufweisenden Kunststoffkörpers aufweist. Hierdurch wird zum einen erreicht, dass der Kunststoffkörper auf einfache Weise präzise auf dem Folienkörper positioniert werden kann, und zum anderen, dass hierdurch ein nachträgliches Ablösen des Kunststoffkörpers von dem ein- oder mehrschichtigen Folienkörper ohne Zerstörung beispielsweise der Schaltung zur RF-Identifikation unterbunden wird. Um diese Vorteile zu erzielen, ist es hier auch weiter möglich, auf dem ein- oder mehrschichtigen Folienkörper ein oder mehrere Führungsstege auszubilden, die der Positionierung des das mindestens eine maschinentesbare Sicherheitselement aufweisenden Kunststoffkörpers dienen.

Weitere Vorteile werden dadurch erzielt, dass ein die elektronische Schaltung zur RF-Identifiikation aufweisender Kunststoffkörper in unmittelbarer Nähe der Falzung angeordnet ist. Hierdurch wird zum einen der mechanische Zugriff auf den Kunststoffkörper und damit Manipulationsversuche erschwert, zum anderen tritt so der durch die Schaltung zur RF-Identifikation auftretende Dickenzuwachs für den Betrachter in den Hintergrund.

So weist nach einem bevorzugten Ausführungsbeispiel der Erfindung der erste Teil des ein- oder mehrschichtigen Folienkörpers eine an die Blätter des Sicherheitsdokuments angepasste Flächenabmessung auf, wohingegen der zweite Teil des ein- oder mehrschichtigen Folienkörpers eine deutlich geringere Breite, nämlich eine Breite von weniger als 10 mm, bevorzugt 5 bis 60 mm besitzt.

Um die Fälschungssicherheit des Sicherheitsdokuments weiter zu erhöhen, wird vorschlagen, einen die elektronische Schaltung zur RF-Identifikation aufweisenden Kunststoffkörper zumindest teiltransparent auszugestalten und in dem zweiten Teil des ein- oder mehrschichtigen Folienkörpers ein oder mehrere individualisierte Sicherheitselemente vorzusehen, welche zumindest bereichsweise von dem Kunststoffkörper überlagert werden oder in diesen integriert sind. So wird beispielsweise der Bereich des Folienkörpers, auf den der Kunststoffkörper mit der RF-Identifikationsschaltung aufzubringen ist, bei der Individualisierung des Sicherheitselements ebenfalls mit einem individualisierten Aufdruck versehen, beispielsweise mit der Pass-Nummer versehen.

Weiter ist es auch möglich, einen die elektronische Schaltung zur RF-Identifikation aufweisenden Kunststoffkörper mit einem derartigen individualisierten Aufdruck zu versehen.

Eine weitere Erhöhung der Fälschungssicherheit des Sicherheitsdokuments kann dadurch erzielt werden, dass ein die elektronische Schaltung zur RF-ldentifiliation aufweisende Kunststoffkörper ein optisch variables Element aufweist. Ein derartiges optisch variables Element besteht beispielsweise aus einer beugungsoptisch wirksamen Struktur, z.B. einem Hologramm^{®} oder Kinegram^{®}. Das Fehlen oder eine Manipulation des die Schaltung zur RF-Identifikation aufweisenden Kunststoffkörpers wir so durch das Fehlen des optisch variablen Elements bzw. die Zerstörung oder partielle Zerstörung des optisch variablen Elements sofort offensichtlich.

Weiter ist es hier auch möglich, auch im zweiten Teil des ein- oder mehrschichtigen Folienkörpers ein optisch variables Element vorzusehen, das benachbart zum ersten optisch variablen Element des das mindestens eine maschinenlesbare Sicherheitselement aufweisenden Folienkörpers angeordnet ist und das eine zu dem ersten optisch variablen Element ergänzende Darstellung zeigt. Ein Fehlen oder eine Zerstörung des optisch variablen Elements des das mindestens eine maschinenlesbare Sicherheitselement, insbesondere die elektronische Schaltung zur RF-ldentifikation enthaltenden Folienkörpers wird so sofort offensichtlich.

Gemäss eines weiteren bevorzugten Ausführungsbeispiels der Erfindung weist der zweite Teil des ein- oder mehrschichtigen Folienkörpers ein optisch variables Element auf, das zumindest bereichsweise überlagernd zum optisch variablen Element des Folienkörpers angeordnet ist. So können beispielsweise optisch variable Elemente, die beugungsoptisch wirksame Strukturen, partielle Metallisierungen oder Farbverschiebungen erzeugende Dünnfilmschichten aufweisen, bereichsweise überlagernd zueinander angeordnet sein. Der sich für den Betrachter ergebende optische Effekt wird durch die sich überlagernden optisch variablen Elemente bestimmt, so dass das Fehlen oder die Zerstörung eines der beiden optisch variablen Elemente sofort offensichtlich wird. Bevorzugt wird durch die Überlagerung der beiden optisch variablen Elemente hierbei ein versteckter optischer Effekt sichtbar. Hierzu weisen die beiden optisch variablen Elemente beispielsweise Moiré-Muster oder Mikrolinsen-Raster auf, in die eine versteckte Information codiert ist. Durch entsprechende Wahl der optisch variablen Elemente ist es hierbei auch möglich, den versteckten optischen Effekt nur bei präziser Positionierung des Kunststoffkörpers zu erzielen, wodurch die Fälschungssicherheit weiter erhöht wird.

Weiter ist es möglich, auf einen die RF-ldentifikationsschaltung enthaltenden Kunststoffkörper nach Applizierung auf dem Folienkörper eine Transferlage einer Transferfolie aufzubringen, die ein optisch variables Element aufweist. Beim Versuch, den Kunststoffkörper von dem Folienkörper abzulösen, wird die Transferlage und damit das die Transferlage enthaltende optisch variable Element zerstört, wodurch eine weitere Erhöhung der Fälschungssicherheit erzielbar ist.

Bevorzugt wird die elektronische Schaltung zur RF-Identifikation individualisiert bevor der Kunststoffkörper dauerhaft mit dem zweiten Teil des ein- oder mehrschichtigen Folienkörpers verbunden wird. So ist es möglich, die Funktionsfähigkeit der Schaltung zur RF-Identifikation vor dauerhafter Verbindung der RF-Identifikationsschaltung mit dem Folienkörper zu testen und damit zur verhindern, dass beim Auftritt von Fehlern in der RF-Identifikationsschaltung das gesamte Sicherheitsdokument ersetzt werden muss.

Weiter ist es vorteilhaft, den das mindestens eine maschinenlesbare Sicherheitselement aufweisenden Kunststoffkörper erst nach Individualisierung des individualisierten optischen Sicherheitselements, insbesondere erst nach Einbindung des Folienkörpers in das Sicherheitsdokument, dauerhaft mit dem zweiten Teil des ein- oder mehrschichtigen Folienkörpers zu verbinden. So ist es beispielsweise möglich, einen bereits ausgegebenen Reisepass im nachhinein noch mit dem mindestens einen maschinenlesbaren Sicherheitselement zu versehen und modular zu ergänzen. Hierdurch wird eine weitere, bisher noch nicht da gewesene Individualisierungs-Möglichkeit für Sicherheitsdokumente geschaffen.

Im Folgenden wird die Erfindung anhand von mehreren Ausführungsbeispielen unter Zuhilfenahme der beiliegenden Zeichnung beispielhaft erläutert.
- Fig. 1: zeigt eine schematische Ansicht eines erfindungsgemässen Sicherheitsdokuments.
- Fig. 2: zeigt eine schematische Draufsicht auf einen in dem Sicherheitsdokument nach Fig. 1 verwendeten Folienkörper.
- Fig. 3: zeigt eine nicht detailgetreue Schnittdarstellung eines ersten Teils des Folienkörpers nach Fig. 2.
- Fig. 4a: zeigt eine nicht massstabsgetreue Schnittdarstellung eines zweiten Teils des Folienkörpers nach Fig. 2.
- Fig. 4b und Fig. 4c: zeigen Schnittdarstellungen weiterer Folienkörper.

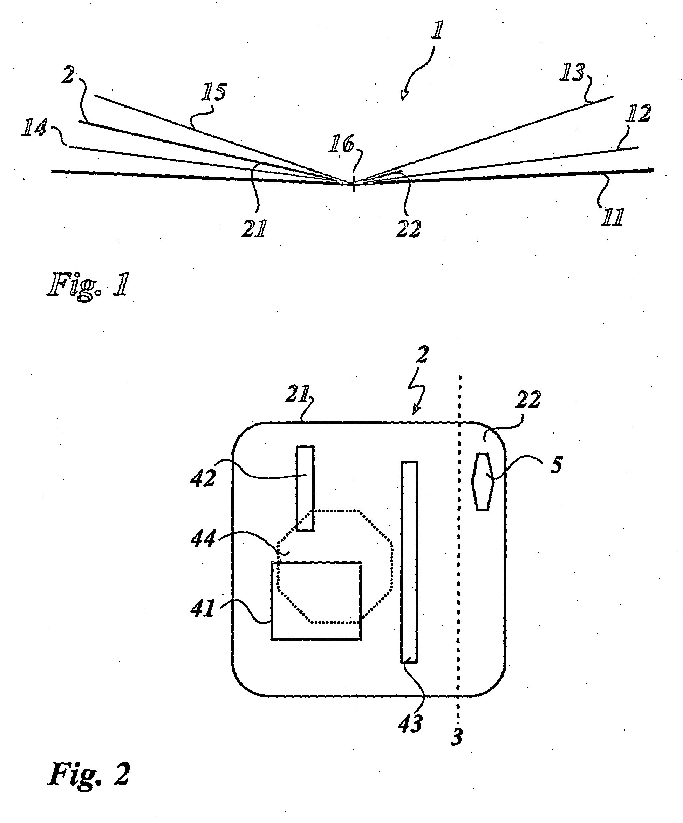

Fig. 1 zeigt ein aufgeschlagenes, individualisiertes Sicherheitsdokument 1, bei dem es sich um einen Reisepass handelt. Es ist jedoch auch möglich, dass es sich bei dem Sicherheitsdokument beispielsweise um einen Führerschein, ein Notariats-Zertifikat, ein Echtheits-, Lizenz- oder Garantie-Zertifikat handelt.

Das Sicherheitsdokument 1 weist einen Umschlag 11, mehrere Blätter 12, 13, 14 und 15, sowie einen blattförmigen Folienkörper 2 auf, die mittels einer in Fig. 1 angedeuteten Heftung 16 miteinander verbunden sind.

Bei den Blättern 12 bis 15 handelt es sich vorzugsweise um mit einem Aufdruck versehene Blätter aus einem Papiermaterial. Die Blätter 12 bis 15 werden als Doppelblatt-Stapel in der Flucht der Halbierenden durch eine Reihe von Stichen mit einem Faden unter Verwendung einer Fadenheftmaschine miteinander und mit dem zwischen sie eingefügten Folienkörper 2 zusammengeheftet. Vorzugsweise wird hierbei ein Kleber entlang der Naht aufgetragen, wodurch durch die Kapillarwirkung des Heftfadens dieser mit dem Klebstoff imprägniert wird. Sodann wird der Klebstoff getrocknet oder - falls es sich um einen UV-härtbaren Klebstoff handelt― durch UV-Bestrahlung mittels einer UV-Lampe gehärtet. Durch die Imprägnierung mit Klebstoff wird die mechanische Lesbarkeit und die Fälschungssicherheit des Sicherheitsdokuments erhöht, da der Klebstoff, der entlang des Heftfadens aufgetragen wird, einen Teil des Buchrückens bildet und sich auf der Innenseite, wo das Buch geöffnet/geschlossen wird, keine Erhöhung auf dem Heftfaden bildet.

Auf die Imprägnierung des Heftfadens mit Klebstoff kann jedoch auch verzichtet werden.

Weiter ist es auch möglich, die Blätter 12 bis 15 und den Folienkörper 2 auch mittels einer Klammerung oder mittels einer Klebung miteinander zu verbinden.

Anschliessend wird der Umschlag 11 als Einband angefügt und die übereinanderliegenden Doppelblätter sowie der Folienkörper 2 und der Umschlag 11 in der Mitte entlang des Heftfadens gefalzt, so dass das Ensemble die Form eines Reisepasses annimmt.

Wie Fig. 1 zu entnehmen ist, wird der Folienkörper 2 durch die Falzung in zwei Teile geteilt, einen Teil 21, der in etwa die Abmessung eines der Blätter 12 bis 15 des Sicherheitsdokuments 1 aufweist, und einen Teil 22, der sich laschenförmig an die Heftung 16 anschliesst und dessen Breite erheblich geringer als die der benachbarten Seiten 12 und 13 des Sicherheitsdokuments 1 ist.

Eine Draufsicht des Folienkörpers 2 ist in Fig. 2 gezeigt.

Fig. 2 zeigt den Folienkörper 2, der entlang der Heftnaht 16 eine in Fig. 2 angedeutete Falzung 3 aufweist. Die Falzung 3 teilt den Folienkörper 2 in die Teile 21 und 22. Der Teil 21 weist mehrere individualisierte optische Sicherheitselemente 41,42 und 43 auf. Bei dem individualisierten Sicherheitselement 41 handelt es sich um ein Photo des Pass-Inhabers. Bei dem individualisierten Sicherheitselement 42 handelt es sich um eine Pass-Nummer und weitere Angaben zur Person des Pass-Inhabers. Bei dem individualisierten Sicherheitselement 43 handelt es sich um einen maschinenlesbaren Code, der beispielsweise die Informationen des Sicherheitselements 42 in maschinenlesbarer Form, beispielsweise als Barcode oder als maschinenlesbare Buchstaben-/Zahlen-Kombination enthält.

Die individualisierten optischen Sicherheitselemente 41 und 42 sind hierbei wie in Fig. 2 angedeutet von einem transparenten optisch variablen Element 44 überlagert, bei dem es sich beispielsweise um ein Hologramm oder um ein Kinegram^{®} handelt. Weiter ist es auch möglich, dass auch das individualisierte optische Sicherheitselement 43 von einem derartigen optisch variablen Element überlagert ist oder dass das Sicherheitsdokument nur ein einziges individualisiertes Sicherheitselement aufweist.

Auf dem Teil 22 des Folienkörpers 2 ist ein eine elektronische Schaltung zur RF-Identifikation aufweisender Kunststoffkörper 5 angeordnet und dauerhaft mit dem Folienkörper 2 verbunden.

Vorzugsweise ist der Kunststoffkörper 5 hierbei möglichst nahe der Falzung 3 auf dem Folienkörper 2 positioniert und die Breite des Teils 22 so gewählt, dass das Teil 22 den Kunststoffkörper 5 nur unwesentlich überragt. Vorzugsweise besitzt das Teil 22 eine Breite von 5 bis 40 mm.

Es ist jedoch auch möglich, den Folienkörper in einer bis zur Größe eines Doppelblatts entsprechenden Flächenabmessung auszuführen.

Bei dem Folienkörper 2 handelt es sich vorzugsweise um einen Folienkörper, dessen Steifigkeit im Bereich der Falzung 3 reduziert ist. Dies kann hierdurch erzielt werden, dass nicht alle Schichten des ein- oder mehrschichtigen Folienkörpers 2 im Bereich der Falzung 3 vorlieben, beispielsweise im Bereich der Falzung 3 durchtrennt sind oder ein oder mehrere Schichten des Folienkörpers 2 nur im Teil 21 vorgesehen sind. Weiter ist es auch möglich, dass im Bereich der Falzung 3 der ein- oder mehrschichtige Folienkörper einen streifenförmigen Einsatz aus einem flexibleren Material aufweist, der die Teile 21 und 22 miteinander verbindet und aus einem Kunststoffmaterial besteht, das in keiner der Schichten der Teile 21 und 22 vorgesehen ist. Weiter ist es auch möglich, ein oder mehrere Schichten des Folienkörpers 2 im Bereich der Falzung 3 durch Perforation zu schwächen und so die Steifigkeit des Folienkörpers 2 im Bereich der Falzung 3 zu verringern. Weiterhin ist es möglich, die Schichtdicke von ein oder mehreren Schichten des Folienkörpers 2 im Bereich der Falzung 3 zu verringern, um so ebenso diesen Effekt zu erzielen.

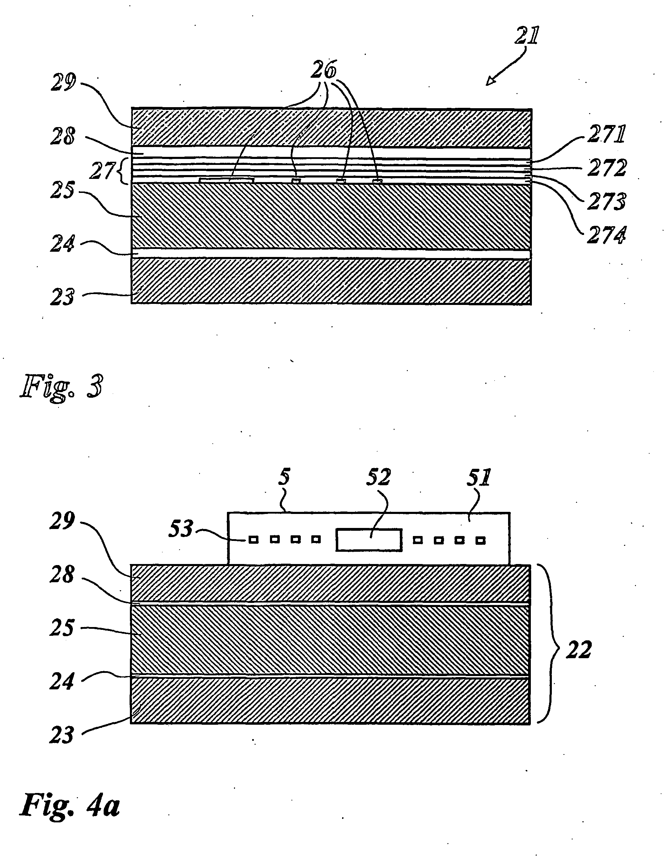

Fig. 3 zeigt beispielhaft eine Schnittdarstellung des Folienkörpers 2 im Bereich des individualisierten optischen Sicherheitselements 41.

Fig. 3 zeigt den Teil 21 des Folienkörpers 2, der aus einer Deckschicht 23, einer Kleberschicht 24, einer Kernschicht 25, einer Dekorlage 27, einer Kleberschicht 28 und einer Deckschicht 29 besteht. Die Deckschicht 23, die Kernschicht 25 mit der Dekorlage 27 sowie die Deckschicht 29 werden in einem Kaschiervorgang durch Hitze und Druck zu dem Folienkörper 2 laminiert. Falls das Material der Deckschichten 23 und 29 und der Kernschicht 25 entsprechend gewählt ist, um beim Kaschiervorgang eine dauerhafte Verbindung der benachbarten Schichten zu erreichen, so kann auf die Kleberschichten 24 und 28 auch verzichtet werden. Der gesamte Aufbau hat im verschweissten Zustand der Einzelschichten in etwa eine Dicke von 300 µm bis 900 µm. Die Deckschichten 29 und 23 bestehen vorzugsweise aus einem thermoplastischen Polyester oder Polycarbonat einer Dicke von 20 bis 150 µm. Die Kernschicht 25 besteht vorzugsweise aus einem opaken Material, beispielsweise aus einem mit einem Aufdruck versehenen Papierträger einer Dicke von 100 bis 300 µm. Die Kleberschichten 24 und 28 haben eine Schichtstärke von 2 bis 10 µm, vorzugsweise 3 bis 6 µm, und bestehen aus einem thermisch aktivierbaren Kleber.

Der Folienkörper 2 kann weiter auch aus einem Papierinlett, bevorzugt aus Sicherheitspapier, und ein- oder beidseitigen Deckfolien bestehen.

Zur Herstellung des Folienkörpers 2 wird auf die Kernlage 25 zuerst ein individualisierter Aufdruck 26, beispielsweise mittels eines Tintenstrahldruckers, aufgebracht, der die bereits anhand der Fig. 2 erläuterten individualisierten Informationen aufweist und ein individualisiertes optisches Sicherheitselement bildet. Hierbei ist es auch möglich, dass ein Teil oder der gesamte Aufdruck 26 mittels eines Druckstoffes erfolgt, der ein Effektpigment, beispielsweise ein Interferenzschichtpigment oder ein cholesterisches Flüssigkristallpigment, enthält. Nach dem Individualisierungsschritt wird auf die durch den Aufdruck 26 individualisierte Kernschicht 25 die Dekorlage 27 aufgebracht. Bei der Dekorlage 27 handelt es sich vorzugsweise um die Transferlage einer Heissprägefolie, die durch Einwirkung von Hitze und Druck vollflächig oder lediglich partiell, beispielsweise im Bereich des optisch variablen Elementes 44, auf die Kernschicht 25 appliziert wird. Vorzugsweise bedeckt hierbei die Dekorlage 27 zumindest teilweise den Bereich des individualisierten Aufdrucks 26.

Die Dekorlage 27 besteht hierbei aus einer Haftvermittlerschicht 271, aus einer Replizierlackschicht 272, aus einer optischen Trennschicht 273 und aus einer Kleberschicht 274.

Bei der Kleberschicht 274 handelt es sich vorzugsweise um einen thermisch aktivierbaren Kleber einer Schichtdicke von 3 bis 6 µm.

Die Replizierlackschicht 272 besteht aus einem thermoplastischen Lack, in den mittels Einwirkung von Hitze und Druck mittels eines Prägewerkzeugs eine diffraktive Oberflächenstruktur repliziert ist. Die Replizierlackschicht hat eine Dicke von ca. 0,05 bis 1,5 µm. Bei der diffraktiven Oberflächenstruktur handelt es sich beispielsweise um ein Hologramm oder Kinegram^{®}, oder um eine sonstige beugungsoptisch aktive Gitterstruktur, die durch Strukturparameter wie Gitterfrequenz, Strukturtiefe, Strukturform und Azimutwinkel bestimmt wird. Die Replizierlackschicht 272 wird hierbei vorzugsweise mittels eines Druckverfahrens vollflächig auf die Haftvermittlerschicht 271 aufgebracht und sodann in einem Trocknungskanal getrocknet. Anschliessend erfolgt das Replizieren der diffraktiven Oberflächenstruktur mittels eines beheizten Prägestempels. Weiter ist es auch möglich, als Replizierlack einen UV-vernetzbaren Lack zu verwenden und die diffraktive Oberflächenstruktur mittels UV-Replikation zu erzeugen.

Anschliessend wird auf die Replizierlackschicht 272 die optische Trennschicht 273 aufgebracht. Bei der optischen Trennschicht 273 handelt es sich vorzugsweise um eine HRI-oder LRI-Schicht (HRI = High Refraction Index, LRI = Low Refraction Index), deren Brechungsindex sich deutlich von dem Brechungsindex der Replizierlackschicht 272 unterscheidet, so dass der von der diffraktiven Struktur erzeugte beugungsoptische Effekt dem Betrachter sichtbar wird. Die optische Trennschicht 273 wird hierbei beispielsweise von einer aufgedampften Schicht aus einem Metalloxid, Metallsulfid, Titandioxid etc. einer Dicke von 10 bis 500 nm gebildet.

Weiter ist es auch möglich, anstelle oder zusätzlich zu den Schichten 272 und 273 in die Dekorlage noch weitere Schichten einzubringen, die einen optisch variablen Effekt generieren. So ist es beispielsweise möglich, ein einen blickwinkelabhängigen Farbverschiebungseffekt erzeugendes Dünnfilmschicht-System oder eine partiell ausgeführte Metallisierung in der Dekorlage 27 vorzusehen.

Weiter ist es auch möglich, auf die Haftvermittlerschicht 271 zu verzichten, wenn eine ausreichende Haftung zwischen der Replizierlackschicht 272 und der Kleberschicht 28 bzw. der Deckschicht 29 während des Kaschiervorgangs gegeben ist.

Nach Applizierung der Dekorlage 27 auf der Kernschicht 25 wird der Folienkörper 2 in einem Kaschiervorgang durch Überlaminierung der Deckschichten 23 und 29 erzeugt.

Weiter ist es auch möglich, auf die Überlaminierung der Deckschichten 23 und 29 zu verzichten und auf die durch den individualisierten Aufdruck 26 individualisierte Kernlage 25 eine die Dekorlage 27 enthaltenden Folienkörper, vorzugsweise als Teil einer Transferlage, aufzubringen. In diesem Fall weist die Dekorlage 27 anstelle der Haftvermittlerschicht 271 eine Schutzlackschicht oder zusätzlich eine auf der Haftvermittlerschicht 271 verbleibende Trägerschicht auf, wie dies beispielsweise in WO 2004/011272 A2 verdeutlicht ist.

Weiter ist es auch möglich, dass die Individualisierung des Folienkörpers 2 zusätzlich zu oder anstelle des individualisierten Aufdrucks 26 durch ein Laserbeschriftungsverfahren erfolgt, bei dem durch Ausbrennen oder Generieren eines Farbumschlages in ein oder mehreren Schichten der Dekorlage 27 oder der Kernschicht 25 eine individualisierte Information in den Folienkörper 2 eingebracht wird.

Weiter ist es auch möglich, auf die Kernschicht 25 zu verzichten oder als Kernschicht 25 eine transparente Kunststofffolie oder ein Sicherheitspapier zu verwenden. Weiter kann die Kernschicht 25 auch nur teilflächig in dem Folienkörper 2 vorgesehen sein und sich beispielsweise nur über einen kartenförmigen Bereich im Teil 21 des Folienkörpers 2 erstrecken. In dem diesen kartenförmigen Bereich umgebenden Bereich des Folienkörpers 2 liegen die Decklagen 23 und 28 damit unmittelbar übereinander.

Fig. 4a zeigt einen Ausschnitt des Teils 22 des Folienkörpers 2 mit dem ' Kunststoffkörper 5.

Der Kunststoffkörper 5 besteht vorzugsweise aus einem dünnen, flexiblen Folienkörper einer Schichtdicke von 100 bis 400 µm, der eine zwischen zwei und mehr transparenten Polyesterträgern oder Polycarbonate einlaminierte elektronische Schaltung 52 und eine RF-Antenne 53 aufweist.

Die elektronische Schaltung 52 besteht vorzugsweise aus einer auf einem dünnen Siliziumträger aufgebrachten, in Silizium-Technologie gefertigten integrierten Schaltung. Diese Schaltung weist vorzugsweise einen Mikroprozessor mit zugeordnetem Speicher sowie peripheren Treiberkomponenten auf, die die kommunikation dieses Mikroprozessors über die mittels der RF-Antenne bediente Funkschaltstelle ermöglicht. Die Energieversorgung des Mikroprozessors wird hierbei ebenfalls über die RF-Antenne 53 realisiert, die die in der Antenne induzierte elektromagnetische Strahlungsenergie dem Mikroprozessor zuführt. Der Mikroprozessor weist hierbei einen Speicherbereich mit individualisierten ldentifizierungs- oder Authentifizierungs-Informationen auf, beispielsweise biometrischen Informationen, Pass-Nummer, Angaben zu dem Pass-Inhaber, oder einen dem Inhaber des Passes zugeordneten (geheimen) Schlüssel auf.

Weiter ist es auch möglich, dass die elektronische Schaltung 52 nicht auf der klassischen Silizium-Technologie basiert, sondern dass es sich bei dieser Schaltung um eine organische Halbleiter-Schaltung handelt.

Die Antenne 53 besteht vorzugsweise aus in Form einer in Schlangenform angeordneten Leiterbahn aus einem elektrisch leitfähigen Material, kann jedoch auch aus einem dünnen, eingegossenen oder einlaminierten Draht oder aus einer in der gewünschten Antennenform aufgebrachten leitfähigen Paste oder aus einer dünnen Schicht aus einem leitfähigen Material bestehen, die entsprechend der gewünschten Antennenstruktur durch positive/negative Ätzung, einen entsprechenden Aufdruck oder Ablation, beispielsweise Laser-Ablation, strukturiert ist.

Wie bereits oben erläutert, sind die Antenne 53 und die elektronische Schaltung 52 zwischen ein oder mehreren Schichten eines Polyestermaterials oder Polycarbonats einlaminiert und so von einem Kunststoffmaterial 51 umgeben, das die äussere Formgebung des Kunststoffkörpers 5 bestimmt. Weiter ist es auch möglich, dass es sich bei den Kunststoffkörper 5 um einen Gusskörper handelt, so dass die Antenne 53 und die elektronische Schaltung 52 auf diese Weise in das Kunststoffmaterial 51 eingebettet sind.

Wie in Fig. 4a angedeutet, ist der Kunststoffkörper 5 durch einen Kaschiervorgang mit der Decklage 23 des Folienkörpers 2 verschweisst, so dass das Kunststoffmaterial 51 des Kunststoffkörpers 5 und die Decklage 23 in fester, dauerhafter Verbindung stehen. Anstelle eines Verschweissens des Kunststoffkörpers 5 ist es auch möglich, den Kunststoffkörper 5 mittels eines Permanentklebers, vorugsweise eines strahlungshärtbaren Klebers, dauerhaft mit der Decklage 23 des Folienkörpers 2 zu verbinden.

Weiter ist es auch möglich, den Kunststoffkörper 5 durch Vernieten mittels Kunststoffnieten oder auf sonstige Weise dauerhaft mit dem Folienkörper 2 zu verbinden.

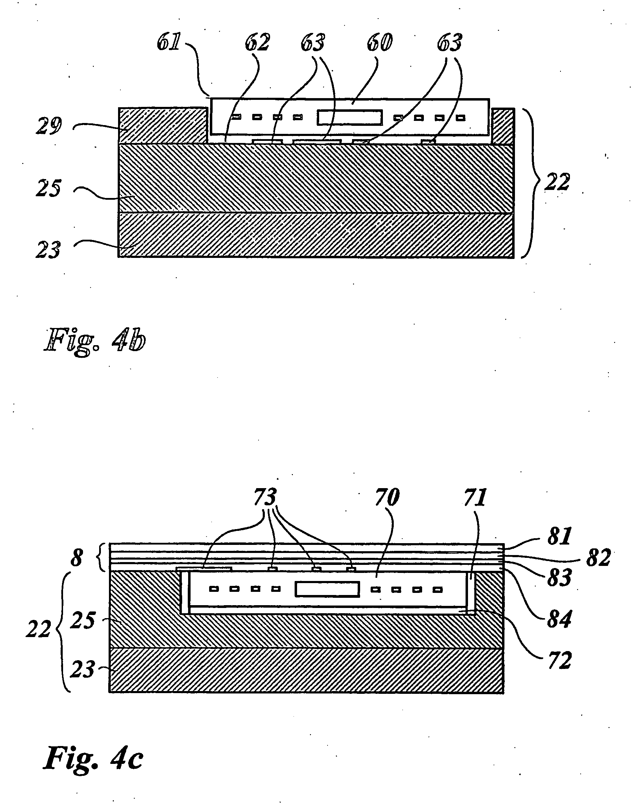

Fig. 4b zeigt eine weitere Möglichkeit der dauerhaften Verbindung eines eine elektronische Schaltung zur RF-Identifikation aufweisenden Kunststoffkörpers 60 mit dem Teil 22 des Folienkörpers 2. Fig. 4b zeigt das Teil 22 mit den laminierten Schichten 23, 25 und 29. Im Bereich des Kunststoffkörpers 60 ist eine der Formgebung des Kunststoffkörpers 60 angepasste Ausnehmung 61 in dem Folienkörper 2 ausgeformt. Vorzugsweise wir hierzu vor Laminierung der Deckschicht 29 mit der Kernschicht 25 ein entsprechend ausgeformtes Fenster durch Schneiden oder Stanzen in die Deckschicht 29 eingearbeitet, so dass der Kunststoffkörper 60 wie in Fig. 4b gezeigt in der Ausnehmung 61 positioniert und mit dem Folienkörper 2 dauerhaft verbunden werden kann.

Nach dem Ausführungsbeispiel von Fig. 4b wird bei der Individualisierung der optischen Sicherheitselemente 41, 42 und 43 auch gleichzeitig die Kernschicht 25 im Bereich der späteren Ausnehmung 61 mit einem individualisierten Aufdruck 63 versehen. Anschliessend erfolgt das Aufbringen der Dekorlage 27 sowie das Kaschieren der Schichten des Folienkörpers 2 und das Einbinden des Folienkörpers 2 sowie der Blätter 12 bis 15 in das Sicherheitsdokument 1. Sodann wird der Kunststoffkörper 60, der wie der Kunststoffkörper 5 nach Fig. 4a ausgestaltet ist, mit der Massgabe, dass das Kunststoffmaterial 51 aus einem transparenten Kunststoffmaterial besteht, mittels einer Schicht aus einem Permanentkleber 62 dauerhaft mit der Kernschicht 25 und vorzugsweise auch im Randbereich mit der Deckschicht 29 verbunden. Durch den Kunststoffkörper 60 ist nun ein durch den individualisierten Aufdruck 63 gebildetes optisches Sicherheitselement für den Betrachter erkennbar, was zu einer weiteren Erhöhung der Fälschungssicherheit führt.

Fig. 4c zeigt nun eine weitere Möglichkeit der dauerhaften Befestigung eines eine elektronische Schaltung zur RF-Identifikation aufweisenden Kunststoffkörpers 70 mit dem Teil 22 des Folienkörpers 2.

Fig. 4c zeigt die miteinander laminierten Schichten 25 und 23 des Teils 22. In die Kernschicht 25 ist eine Ausnehmung 71 eingearbeitet, deren Formgebung der äusseren Formgebung des Kunststoffkörpers 70 entspricht.

Die Ausnehmung 71 kann hier beispielsweise durch Stanzung oder Prägung erzeugt werden und kann auch in Form einer vollständigen, fensterartigen Durchbrechung der Kernschicht 25 ausgeführt sein. Weiter ist es auch möglich, dass sich die Ausnehmung 71 auch in die Deckschicht 23 erstreckt.

Wie bereits unter Fig. 7b beschrieben, wird der Kunststoffkörper 70, der wie der Kunststoffkörper 5 nach Fig. 4a ausgestaltet ist, nach dem Kaschiervorgang in der Ausnehmung 71 positioniert und mittels eines Permanentklebers mit der Kernschicht 25 verbunden. Auch hier ist es möglich, den Kunststoffkörper-wie oben beschrieben - mittels Schweissen oder Vernieten mit dem Folienkörper 2 zu verbinden, falls die Kernschicht 25 in einem entsprechenden, hierfür geeigneten Material (z.B. thermoplastischen Kunststoff) ausgeführt ist.

Die Deckschicht 29 ist in dem Ausführungsbeispiel nach Fig. 4c nicht vollflächig ausgeführt und zumindest im Umgebungsbereich der Ausnehmung 71 nicht vorgesehen. Nach dem dauerhaften Verbinden des Kunststoffkörpers 70 mit der Kernschicht 25 wird auf die Kernschicht 25 und den Folienkörper 70 ein individualisierter Druck 73 aufgebracht, der beispielsweise ein oder mehrere der anhand von Fig. 2 erläuterten Informationen enthält. Anschliessend wird auf die Kernschicht 25 und den Kunststoffkörper 70 eine Transferlage 8 einer Transferfolie appliziert, so dass zumindest sowohl ein Teil des Kunststoffkörpers 70 als auch ein Teil der diesen Kunststoffkörper umgebenden Kernschicht 25 mit der Transferlage 8 bedeckt ist.

Die Transferläge 8 ist wie die Dekorlage 27 nach Fig. 3 ausgebildet und weist eine Kleberschicht 84, eine optische Trennschicht 83, eine Replizierlackschicht 82 mit einer diffraktiven Oberflächenstruktur und eine Schutzlackschicht 81 auf. Durch die Transferlage 8 wird ein transparentes, optisch variables Element im Bereich der Durchbrechung 71 bereitgestellt, das den Folienkörper 70 zumindest teilweise überlagert. Wird versucht, den Folienkörper 70 von der Kernschicht 25 abzulösen, so wird dieses optisch variable Element zerstört, wodurch eine derartige Manipulation sofort augenscheinlich wird.

Weiter ist es auch möglich, dass der Folienkörper 70 ein vorzugsweise reflektiv ausgestaltetes optisch variables Element aufweist, das benachbart oder überlagernd zu dem optisch variablen Element der Transferlage 8 positioniert ist. Falls die beiden optisch variablen Elemente ergänzende oder sich überlagernde Effekte zeigen, so können Manipulationsversuche schnell und sicher erkannt werden.

Weiter ist es auch möglich, dass die Schutzlackschicht 81 der Transferlage 8 durch die Haftvermittlerschicht 271 nach Fig. 3 ersetzt wird, und - wie in Fig. 3 - die Deckschicht 29 über die Transferlage 8 laminiert wird.

## Patentansprüche

1. lndividualisiertes Sicherheitsdokument (1), insbesondere Reisepass, das eine Anzahl Blätter (12 bis 15) aufweist, die miteinander mittels einer Heftung oder Klebung verbunden sind, wobei
in das Sicherheitsdokument (1) mittels Heftung oder Klebung ein mit einem individualisierten optischen Sicherheitselement (41, 42, 43) versehener ein- oder mehrschichtiger Folienkörper (2) eingebunden ist, der im Bereich der Heftung oder Klebung gefalzt ist, wobei die Falzung den Folienkörper in einen ersten Teil (21), auf dem das individualisierte optische Sicherheitselement (41, 42, 43) angeordnet ist, und einen zweiten, vorzugsweise laschenförmigen Teil (22) teilt, der mit einem mindestens ein maschinenlesbares Sicherheitselement aufweisenden Kunststoffkörper (5) dauerhaft verbunden ist, und wobei das mindestens eine maschinenlesbare Sicherheitselement eine elektronische Schaltung zur RF-Identifikation aufweist.

2. Individualisiertes Sicherheitsdokument nach Anspruch 1,
**dadurch gekennzeichnet ,**
**dass** der Kunststoffkörper neben der Schaltung zur RF-identifikation mindestens ein weiteres maschinenlesbares Sicherheitselement aufweist.

3. Individualisiertes Sicherheitsdokument nach Anspruch 2,
**dadurch gekennzeichnet ,**
**dass** das weitere maschinenlesbare Sicherheitselement eine elektrisch oder magnetisch oder optisch auslesbare Information enthält.

4. Individualisiertes Sicherheitsdokument nach Anspruch 1,
**dadurch gekennzeichnet,**
**dass** der ein- oder mehrschichtige Folienkörper (2) und der das mindestens eine maschinenlesbare Sicherheitselement aufweisende Kunststoffkörper (5) miteinander verschweisst sind.

5. Individualisiertes Sicherheitsdokument nach Anspruch 1,
**dadurch gekennzeichnet,**
**dass** der ein- oder mehrschichtige Folienkörper (2) und der das mindestens eine maschinenlesbare Sicherheitselement aufweisende Kunststoffkörper (60, 70) mittels eines Permanentklebers, insbesondere mittels eines strahlungshärtbaren Klebers, dauerhaft miteinander verbunden sind.

6. Individualisiertes Sicherheitsdokument nach Anspruch 1,
**dadurch gekennzeichnet,**
**dass** der ein- oder mehrschichtige Folienkörper und der das mindestens eine maschinenlesbare Sicherheitselement aufweisende Kunststoffkörper mittels Nietung miteinander verbunden ist.

7. Individualisiertes Sicherheitsdokument nach einem der vorhergehenden Ansprüche,
**dadurch gekenntzeichnet**
dass der zweite Teil (22) des ein- oder mehrschichtigen Folienkörpers (2) eine Ausnehmung (61, 71) zur vollständigen oder teilweisen Aufnahme des das mindestens eine maschinenlesbare Sicherheitselement aufweisenden Kunststoffkörpers (60, 70) aufweist.

8. Individualisiertes Sicherheitsdokument nach einem der vorhergehenden Ansprüche,
**dadurch gekennzeichnet,**
**dass** der das mindestens eine maschinenlesbare Sicherheitselement aufweisende Kunststoffkörper (5) in unmittelbarer Nähe der Falzung (3) angeordnet ist.

9. Individualisiertes Sicherheitsdokument nach einem der vorhergehenden Ansprüche,
**dadurch gekenntzeichnet**
dass der erste Teil des ein- oder mehrschichtigen Folienkörpers (2) eine an die Blätter (12 bis 15) des Sicherheitsdokuments (1) angepasste Flächenabmessung aufweist und der zweite Teil (22) des ein- oder mehrschichtigen Folienkörpers eine Breite von 5-60 mm, bevorzugt von weniger als 10 mm besitzt.

10. Sicherheitsdokument nach einem der vorhergehenden Ansprüche,
**dadurch gekennzeichnet,**
**dass** der das mindestens eine maschinenlesbare Sicherheitselement aufweisende Kunststoffkörper (60) zumindest teiltransparent ist und der zweite Teil (22) des ein- oder mehrschichtigen Folienkörpers (2) mindestens ein individualisiertes Sicherheitselement (63) aufweist, das zumindest bereichsweise von dem Kunststoffkörper (60) überlagert ist.

11. Sicherheitsdokument nach einem der vorhergehenden Ansprüche,
**dadurch gekennzeichnet,**
**dass** der das mindestens eine maschinenlesbare Sicherheitselement aufweisende Kunststoffkörper (70) mit einem individualisierten Aufdruck (73) versehen ist.

12. Sicherheitsdokument nach einem der vorhergehenden Ansprüche,
**dadurch gekennzeichnet,**
**dass** der das mindestens eine maschinenlesbare Sicherheitselement aufweisende Kunststoffkörper ein erstes optisch variables Element aufweist.

13. Sicherheitsdokument nach Anspruch 12,
**dadurch gekennzeichnet,**
**dass** der zweite Teil des ein- oder mehrschichtigen Folienlkörpers ein optisch variables Element aufweist, das benachbart zum ersten optisch variablen Element des Folienkörpers angeordnet ist und eine zu dem ersten optisch variablen Element ergänzende Darstellung zeigt.

14. Sicherheitsdokument nach Anspruch 12,
**dadurch gekennzeichnet,**
**dass** der zweite Teil des ein- oder mehrschichtigen Folienkörpers ein optisch variables Element aufweist, das zumindest bereichsweise überlagernd zum ersten optisch variablen Element des Folienkörpers angeordnet ist.

15. Sicherheitsdokument nach Anspruch 14,
**dadurch gekennzeichnet,**
**dass** durch Überlagerung der ersten und zweiten optisch variablen Elemente ein versteckter optischer Effekt sichtbar wird.

16. Sicherheitsdokument nach einem der vorhergehenden Ansprüche,
**dadurch gekennzeichnet,**
**dass** auf den Kunststoffkörper (70) eine Transferlage (8) einer Transferfolie aufgebracht ist, die ein optisch variables Element aufweist.

17. Verfahren zur Individualisierung eines Sicherheitsdokuments (1), insbesondere eines Reisepasses, wobei das Sicherheitsdokument eine Anzahl Blätter (12 bis 15) aufweist, die miteinander mittels einer Heftung oder Klebung verbunden sind,
wobei
ein in das Sicherheitsdokument (1) mittels Heftung oder Klebung eingebundener ein- oder mehrschichtiger Folienkörper (2), der im Bereich der Heftung oder Klebung gefalzt ist und bei dem die Falzung (3) den Folienkörper (2) in einen ersten Teil (21) und einen zweiten, vorzugsweise laschenförmigen Teil (22) teilt, in dem ersten Teil (21) mit einem individualisierten optischen Sicherheitselement (41, 42, 43) versehen wird und der zweite Teil (22) mit einem mindestens ein maschinenlesbares Sicherheitselement aufweisenden Kunststoffkörper (5) dauerhaft verbunden wird, wobei das mindestens eine maschinenlesbare Sicherheitselement eine elektronische Schaltung zur RF-Identifikation aufweist.

18. Verfahren nach Anspruch 17,
**dadurch gekennzeichnet,**
**dass** das mindestens eine maschinenlesbare Sicherheitselement individualisiert wird, bevor der Kunststoffkörper (5) dauerhaft mit dem zweiten Teil (22) des ein- oder mehrschichtigen Folienkörpers (2) verbunden wird.

19. Verfahren nach Anspruch 17,
**dadurch gekennzeichnet,**
**dass** der das mindestens eine maschinenlesbare Sicherheitselement aufweisende Kunststoffkörper erst nach der Individualisierung des individualisierten optischen Sicherheitselements mit dem zweiten Teil des ein- oder mehrschichtigen Folienkörpers dauerhaft verbunden wird.

20. Verfahren nach Anspruch 19,
**dadurch gekennzeichnet,**
**dass** der das mindestens eine maschinenlesbare Sicherheitselement aufweisende Kunststoffkörper erst nach Einbindung des ein- oder mehrschichtigen Folienkörpers in das Sicherheitsdokument mit dem zweiten Teil des ein- oder mehrschichtigen Folienkörpers dauerhaft verbunden wird.

## Claims

1. Individualized security document (1), in particular passport, having a number of sheets (12 to 15) which are connected to one another by way of stitching or an adhesive bond, wherein a single-layer or multi-layer film body (2), which is provided with an individualized optical security element (41, 42, 43) and is folded in the region of the stitching or adhesive bond, is bound into the security document (1) by way of stitching or an adhesive bond, wherein the folding divides the film body into a first part (21), on which the individualized optical security element (41, 42, 43) is arranged, and a second, preferably lug-shaped, part (22), which is permanently connected to a plastic body (5) which has at least one machine-readable security element, and wherein the at least one machine-readable security element has an electronic circuit for RF identification.

2. Individualized security document according to Claim 1, **characterized in that** the plastic body has, in addition to the circuit for RF identification, at least one further machine-readable security element.

3. Individualized security document according to Claim 2, **characterized in that** the further machine-readable security element contains electrically or magnetically or optically readable information.

4. Individualized security document according to Claim 1, **characterized in that** the single-layer or multi-layer film body (2) and the plastic body (5), which has the at least one machine-readable security element, are welded together.

5. Individualized security document according to Claim 1, **characterized in that** the single-layer or multi-layer film body (2) and the plastic body (60, 70), which has the at least one machine-readable security element, are permanently connected to one another by way of a permanent adhesive, in particular by way of a radiation-curable adhesive.

6. Individualized security document according to Claim 1, **characterized in that** the single-layer or multi-layer film body and the plastic body, which has the at least one machine-readable security element, are connected to one another by way of riveting.

7. Individualized security document according to one of the preceding claims, **characterized in that** the second part (22) of the single-layer or multi-layer film body (2) has a recess (61, 71) for completely or partially receiving the plastic body (60, 70), which has the at least one machine-readable security element.

8. Individualized security document according to one of the preceding claims, **characterized in that** the plastic body (5), which has the at least one machine-readable security element, is arranged in the direct vicinity of the folding (3).

9. Individualized security document according to one of the preceding claims, **characterized in that** the first part of the single-layer or multi-layer film body (2) has an area size which is matched to the sheets (12 to 15) of the security document (1) and the second part (22) of the single-layer or multi-layer film body has a width of 5-60 mm, preferably less than 10 mm.

10. Security document according to one of the preceding claims, **characterized in that** the plastic body (60), which has the at least one machine-readable security element, is at least partially transparent and the second part (22) of the single-layer or multi-layer film body (2) has at least one individualized security element (63) which is overlapped at least in regions by the plastic body (60).

11. Security document according to one of the preceding claims, **characterized in that** the plastic body (70), which has the at least one machine-readable security element, is provided with an individualized print (73).

12. Security document according to one of the preceding claims, **characterized in that** the plastic body, which has the at least one machine-readable security element, has a first optically variable element.

13. Security document according to Claim 12, **characterized in that** the second part of the single-layer or multi-layer film body has an optically variable element which is arranged in the neighbourhood of the first optically variable element of the film body and shows a representation which complements the first optically variable element.

14. Security document according to Claim 12, **characterized in that** the second part of the single-layer or multi-layer film body has an optically variable element which is arranged such that it overlaps at least in regions with the first optically variable element of the film body.

15. Security document according to Claim 14, **characterized in that** a hidden optical effect becomes visible due to the overlapping of the first and second optically variable elements.

16. Security document according to one of the preceding claims, **characterized in that** a transfer layer (8) of a transfer film having an optically variable element is applied on the plastic body (70).

17. Method for individualizing a security document (1), in particular a passport, where the security document has a number of sheets (12 to 15) which are connected to one another by way of stitching or an adhesive bond, wherein a single-layer or multi-layer film body (2), which is bound into the security document (1) by way of stitching or an adhesive bond, is folded in the region of the stitching or adhesive bond, and in which the folding (3) divides the film body (2) into a first part (21) and a second, preferably lug-shaped, part (22), is provided in the first part (21) with an individualized optical security element (41, 42, 43), and the second part (22) is permanently connected to a plastic body (5) which has at least one machine-readable security element, wherein the at least one machine-readable security element has an electronic circuit for RF identification.

18. Method according to Claim 17, **characterized in that** the at least one machine-readable security element is individualized before the plastic body (5) is permanently connected to the second part (22) of the single-layer or multi-layer film body (2).

19. Method according to Claim 17, **characterized in that** the plastic body, which has the at least one machine-readable security element, is permanently connected to the second part of the single-layer or multi-layer film body only after the individualized optical security element has been individualized.

20. Method according to Claim 19, **characterized in that** the plastic body, which has the at least one machine-readable security element, is permanently connected to the second part of the single-layer or multi-layer film body only after the single-layer or multi-layer film document has been bound into the security document.

## Revendications

1. Document de sécurité (1) individualisé, en particulier un passeport, qui présente un certain nombre de feuilles (12 à 15), qui sont reliées les unes aux autres par couture ou collage,
un corps de feuilles (2) à une ou plusieurs couches muni d'un élément de sécurité (41, 42, 43) optique individualisé étant intégré dans le document de sécurité (1) par couture ou collage, lequel corps étant plié dans la zone de couture ou de collage, le pli divisant le corps de feuilles en une première partie (21), sur laquelle est agencé l'élément de sécurité (41, 42, 43) optique individualisé et en une deuxième partie (22), de préférence en forme de languette, qui est reliée durablement à un corps en plastique (5) présentant au moins un élément de sécurité lisible par ordinateur, et l'au moins un élément de sécurité lisible par ordinateur présentant un circuit électronique pour l'identification par radiofréquences.

2. Document de sécurité individualisé selon la revendication 1,
**caractérisé en ce**
**que** le corps en plastique présente outre le circuit pour l'identification par radiofréquences, au moins un autre élément de sécurité lisible par ordinateur.

3. Document de sécurité individualisé selon la revendication 2,
**caractérisé en ce**
**que** l'autre élément de sécurité lisible par ordinateur contient une information pouvant être lue par voie électrique ou magnétique ou optique.

4. Document de sécurité individualisé selon la revendication 1,
**caractérisé en ce**
**que** le corps de feuilles (2) à une ou plusieurs couches et le corps en plastique (5) présentant l'au moins un élément de sécurité lisible par ordinateur sont soudés l'un à l'autre.

5. Document de sécurité individualisé selon la revendication 1,
**caractérisé en ce**
**que** le corps de feuilles (2) à une ou plusieurs couches et le corps en plastique (60, 70) présentant l'au moins un élément de sécurité lisible par ordinateur sont reliés durablement ensemble au moyen d'une colle permanente, en particulier à l'aide d'une colle durcissable par rayonnement.

6. Document de sécurité individualisé selon la revendication 1,
**caractérisé en ce**
**que** le corps de feuille à une ou plusieurs couches et le corps en plastique présentant l'au moins un élément de sécurité lisible par ordinateur sont reliés ensemble par rivetage.

7. Document de sécurité individualisé selon l'une quelconque des revendications précédentes,
**caractérisé en ce**
**que** la deuxième partie (22) du corps de feuilles (2) à une ou plusieurs couches présente un évidement (61, 71) pour la réception complète ou partielle du corps en plastique (60, 70) présentant l'au moins un élément de sécurité lisible par ordinateur.

8. Document de sécurité individualisé selon l'une quelconque des revendications précédentes,
**caractérisé en ce**
**que** le corps en plastique (5) présentant l'au moins un élément de sécurité lisible par ordinateur est agencé à proximité immédiate du pli (3).

9. Document de sécurité individualisé selon l'une quelconque des revendications précédentes,
**caractérisé en ce**
**que** la première partie du corps de feuilles (2) à une ou plusieurs couches présente une superficie adaptée aux feuilles (12 à 15) du document de sécurité (1) et la deuxième partie (22) du corps de feuilles à une ou plusieurs couches a une largeur de 5-60 mm, de préférence inférieure à 10 mm.

10. Document de sécurité selon l'une quelconque des revendications précédentes,
**caractérisé en ce**
**que** le corps en plastique (60) présentant l'au moins un élément de sécurité lisible par ordinateur est au moins partiellement transparent et la deuxième partie (22) du corps de feuilles à une ou plusieurs couches (2) présente au moins un élément de sécurité (63) individualisé, qui est recouvert au moins par zones par le corps en plastique (60).

11. Document de sécurité selon l'une quelconque des revendications précédentes,
**caractérisé en ce**
**que** le corps en plastique (70) présentant l'au moins un élément de sécurité lisible par ordinateur est muni d'une impression (73) individualisée.

12. Document de sécurité selon l'une quelconque des revendications précédentes,
**caractérisé en ce**
**que** le corps en plastique présentant l'au moins un élément de sécurité lisible par ordinateur présente un premier élément variable du point de vue optique.

13. Document de sécurité selon la revendication 12,
**caractérisé en ce**
**que** la deuxième partie du corps de feuilles à une ou plusieurs couches présente un élément variable du point de vue optique, qui est adjacent au premier élément variable du point de vue optique du corps de feuilles et montre une représentation complémentaire au premier élément variable du point de vue optique.

14. Document de sécurité selon la revendication 12,
**caractérisé en ce**
**que** la deuxième partie du corps de feuilles à une ou plusieurs couches présente un élément variable du point de vue optique, qui est agencé de sorte à recouvrir au moins par zone l'élément variable du point de vue optique du corps de feuilles.

15. Document de sécurité selon la revendication 14,
**caractérisé en ce**
**que** la superposition des premier et deuxième éléments variables du point de vue optique rend visible un effet optique caché.

16. Document de sécurité selon l'une quelconque des revendications précédentes,
**caractérisé en ce**
**qu'**une couche de transfert (8) d'une feuille de transfert, qui présente un élément variable du point de vue optique, est appliquée sur le corps en plastique (70).

17. Procédé d'individualisation d'un document de sécurité (1), en particulier d'un passeport, le document de sécurité présentant un certain nombre de feuilles (12 à 15), qui sont reliées les unes aux autres par couture ou collage,
un corps de feuilles (2) à une ou plusieurs couches intégré dans le document de sécurité (1) par couture ou collage, qui est plié dans la zone de couture ou de collage et sur lequel le pli (3) divise le corps de feuilles (2) en une première partie (21) et en une deuxième partie (22), de préférence en forme de languette, étant muni dans la première partie (21) d'un élément de sécurité (41, 42, 43) optique individualisé et la deuxième partie (22) étant reliée durablement à un corps en plastique (5) présentant au moins un élément de sécurité lisible par ordinateur, l'au moins un élément de sécurité lisible par ordinateur présentant un circuit électronique pour l'identification par radiofréquences.

18. Procédé selon la revendication 17,
**caractérisé en ce**
**que** l'au moins un élément de sécurité lisible par ordinateur est individualisé avant que le corps en plastique (5) ne soit relié durablement à la deuxième partie (22) du corps de feuilles (2) à une ou plusieurs couches.

19. Procédé selon la revendication 17,
**caractérisé en ce**
**que** le corps en plastique présentant l'au moins un élément de sécurité lisible par ordinateur n'est relié durablement à la deuxième partie du corps de feuilles à une ou plusieurs couches qu'après individualisation de l'élément de sécurité optique individualisé.

20. Procédé selon la revendication 19,
**caractérisé en ce**
**que** le corps en plastique présentant l'au moins un élément de sécurité lisible par ordinateur n'est relié durablement à la deuxième partie du corps dé feuilles à une ou plusieurs couches qu'après intégration du corps de feuilles à une ou plusieurs couches dans le document de sécurité.
